# FASCICULE DE BREVET EUROPEEN

(11) **EP 3 199 213 B1**
(45) Date de publication et mention de la délivrance du brevet: **29.07.2020**
(21) Numéro de dépôt: 16153402.9
(22) Date de dépôt: 29.01.2016
(51) Int. Cl.: A63B 69/18, A63C 5/06, G07C 1/24, G01S 7/00, G01S 13/86, G01S 13/88, G01S 13/60

(54) **PROCÉDÉ ET SYSTÈME DE MESURE DE LA VITESSE D'UN COMPÉTITEUR SUR UNE PISTE DE COURSE**
VERFAHREN UND SYSTEM ZUR GESCHWINDIGKEITSMESSUNG EINES RENNTEILNEHMERS AUF EINER RENNSTRECKE
METHOD AND SYSTEM FOR MEASURING THE SPEED OF A COMPETITOR ON A RUNNING TRACK

(43) Date de publication de la demande: 02.08.2017
(73) Titulaire: Swiss Timing Ltd., 2606 Corgémont (CH)
(72) Inventeur: Massé, Fabien, 1004 Lausanne (CH); Galli, Reto, 3053 Münchenbuchsee (CH)
(74) Mandataire: Giraud, Eric

(56) Documents cités:
- EP-A2- 1 406 066
- WO-A2-01/00281
- DE-A1- 19 518 638
- US-A1- 2002 116 147
- US-B1- 6 570 526

## Description

### Domaine de l'invention

L'invention concerne un procédé de mesure et d'affichage d'au moins la vitesse d'un compétiteur, par exemple d'un skieur ou d'un surfeur des neiges, sur une piste de course, par exemple une piste de ski ou de snowboard.

L'invention concerne également un système de mesure continue d'au moins la vitesse d'un compétiteur pour la mise en œuvre du procédé.

### Arrière-plan de l'invention

Dans une compétition, telle qu'une course de descente à ski, la vitesse d'un compétiteur, tel qu'un skieur, peut être mesurée aujourd'hui en utilisant par exemple deux cellules photoélectriques, qui sont placées à quelques mètres de distance l'une de l'autre. Une telle mesure de vitesse peut encore être effectuée au moyen d'un système radar à effet Doppler, qui utilise un pistolet radar, comme ceux indiqués sous le site http://www.stalkerradar.com/sportsradar/. Plusieurs pistolets radars peuvent être placés à proximité de la piste de descente à différents endroits clés de ladite piste.

Les dispositifs de mesure de la vitesse dans une course de ski, qui peuvent être stationnaires, ne sont pas capables de fournir la vitesse en continu, mais uniquement en certains points sur la piste de course. De plus, aucun dispositif portable ne comprend de moyens capables de transmettre les résultats en temps réel à une station de base dans le but d'afficher en direct la vitesse sur un écran ou à la télévision.

Les dispositifs portables radars ou ultrasoniques conventionnels ont également l'inconvénient que durant une course de descente à ski, ils peuvent perdre contact avec un moyen stationnaire en liaison pour la mesure de la vitesse. Cela signifie que même un radar Doppler à grand angle peut perdre la vision du sol durant l'exécution de sauts dans la course. Cela perturbe la mesure de la vitesse en temps réel.

La demande de brevet US 2002/0116147 A1 décrit un dispositif portable muni d'une unité à capteurs reliés à un contrôleur. Les capteurs peuvent être un capteur de vitesse, tel qu'un capteur à effet Doppler, un capteur de puissance, et un capteur de distance de chute, comme un capteur de pression ou altimètre. Une unité de communication RF peut être prévue pour communiquer des données de mesure à une station de base. Les mesures des capteurs peuvent être mémorisées dans le dispositif portable et traitées dans ledit dispositif avant leur transmission.

Cependant un tel dispositif portable ne décrit pas une opération d'activation et de synchronisation au moment du départ de la course, ainsi qu'une opération de calibration du capteur de pression. Une combinaison des mesures effectuées par les capteurs ne permet pas de déterminer avec précision la vitesse, le temps de vol, la distance parcourue en vol, ainsi que la transmission de la mesure de vitesse en continu à une station de base pour l'afficher sur un écran d'affichage, ce qui constitue des inconvénients.

La demande de brevet EP 1 406 066 A2 décrit un dispositif pour déterminer la distance en course par des mesures de gradients et de différences de pression. La différence de pression est mesurée par un capteur de pression, alors que les gradients sont mesurés par un capteur d'accélération, qui prend en compte l'accélération statique et dynamique.

Le dispositif ne décrit également pas l'activation et la synchronisation, ainsi que la calibration des capteurs au moment du départ d'une course. Aucune combinaison claire des mesures effectuées par les capteurs n'est décrite pour déterminer précisément la vitesse en continu durant la course de descente à ski à transmettre à une station de base pour un affichage sur un écran, ce qui constitue des inconvénients.

La demande de brevet US 2002/0059044 A1 décrit un dispositif portable pour la mesure principalement d'une vitesse à ski. Pour ce faire, il est utilisé un capteur de vitesse et un capteur pour déterminer des sauts ou temps de vol. Un microprocesseur permet de convertir notamment l'information du capteur de sauts pour déterminer le temps de vol. Un dispositif d'affichage peut être prévu pour montrer ce temps au skieur, mais il n'est pas possible d'envoyer des informations en temps réel.

Un tel dispositif ne décrit pas l'activation et la synchronisation, ainsi que la calibration des capteurs au moment du départ de la course. De plus, aucune combinaison des mesures des capteurs ne permet de déterminer précisément la vitesse en continu du skieur à transmettre à une station de base pour l'affichage sur un écran, ce qui constitue des inconvénients.

D'autres dispositifs portables sont connus pour la mesure de la vitesse d'un skieur. On peut citer notamment le brevet US 4,546,650, qui décrit un dispositif de mesure de la vitesse, qui comprend au moins une roue en contact de la piste et des moyens pour déterminer la vitesse de rotation de la roue. Cependant ce type de dispositif ne permet pas d'effectuer une mesure de vitesse précise et en continu.

Dans le brevet EP 1 084 422 B1, il est décrit l'utilisation d'au moins un capteur Doppler ultrasonore ou à microonde, qui est disposé sur le ski, sur la chaussure de ski ou à la ceinture du skieur. Le capteur Doppler est avec un large angle d'ouverture, qui peut varier de manière à permettre une mesure d'une précision de ±1%, mais il ne permet pas d'effectuer une mesure précise de vitesse en continu depuis le départ du skieur et durant un saut dans la course.

Il est encore à noter qu'il peut être envisagé d'effectuer la mesure de vitesse en continu en utilisant un récepteur GPS. En fonction des perturbations dues aux multi-trajets des signaux, à un ciel obstrué par des montagnes ou d'autres objets et à la dilution géométrique de la précision, une précision de 95% peut être néanmoins atteinte. Sur une pente de montage avec 45° d'inclinaison, la vitesse horizontale est 30% plus basse que la vitesse selon trois dimensions. Pour travailler précisément sur un skieur en course, le récepteur GPS doit être placé sur le casque d'un skieur, mais cela représente un risque de sécurité non acceptable durant une course de descente. De plus, comme le capteur n'est pas solidaire avec le ski, il y a un manque de précision dû aux mouvements entre la tête et le ski. Même si la technologie GPS permet la mesure de vitesse normalement dans trois directions, l'utilisateur du dispositif GPS ne reçoit que la vitesse à deux dimensions horizontalement. Cela peut causer pour le skieur une grande différence par rapport à sa vitesse réelle, ce qui constitue un inconvénient.

### Résumé de l'invention

L'invention a donc pour but de pallier les inconvénients de l'état de la technique susmentionné en proposant un procédé de mesure d'au moins la vitesse d'un compétiteur, par exemple d'un skieur ou d'un surfeur des neiges, sur une piste de course, par exemple une piste de ski ou de snowboard, dans lequel il est possible d'effectuer précisément une mesure d'une vitesse en continu durant la course à transmettre à au moins une station de base.

A cet effet, l'invention concerne un procédé de mesure d'au moins la vitesse d'un compétiteur durant une course, qui comprend les caractéristiques définies dans la revendication indépendante 1.

Des étapes particulières du procédé de mesure d'au moins la vitesse d'un compétiteur sont définies dans les revendications dépendantes 2 à 9.

Un avantage du procédé de mesure de la vitesse réside dans le fait que la vitesse notamment d'un skieur peut être visionnée sur un écran d'affichage distant, tel qu'une télévision durant toute la course et pas seulement en des points déterminés de la piste de course. Le module à transpondeur comprend donc une unité de mesure ayant au moins un capteur de vitesse, tel qu'un capteur de vitesse radar à effet Doppler pour mesurer en temps réel ou en continu la vitesse durant la course. Cette mesure de vitesse peut être effectuée depuis le départ et jusqu'à l'arrivée de la course. Pour ce faire, le module à transpondeur est activé et synchronisé depuis le départ par une transmission de synchronisation provenant d'un émetteur d'un dispositif décodeur à garde-temps ou base de temps précise ou par un capteur sur place.

Un avantage du procédé de mesure de la vitesse du compétiteur réside dans le fait qu'il est pris en compte encore une mesure effectuée par au moins un capteur de mouvement du module à transpondeur, tel qu'un capteur inertiel de mouvement à 9 axes ayant un accéléromètre triaxial, un gyroscope triaxial et un capteur magnétique triaxial. La mesure du capteur de mouvement permet de déterminer la vitesse du compétiteur notamment durant des sauts sur le tracé de course. Une fusion de la mesure du capteur radar Doppler et du capteur de mouvement peut être opérée dans le module à transpondeur pour déterminer précisément une mesure de vitesse à communiquer en temps réel ou en continu. Il peut encore être utilisé une mesure d'un capteur de pression du module à transpondeur, qui est calibré dès le départ de la course, pour fournir des données de hauteur et déterminer une vitesse verticale notamment lors de sauts durant la course.

Avantageusement, il peut être également mesuré la longueur des sauts effectués par le compétiteur durant la descente à ski ou en snowboard par les capteurs de l'unité de mesure du module à transpondeur. De plus, il peut aussi être possible d'apparier les mesures de vitesse en des positions exactes sur la piste de course en utilisant la pression barométrique du capteur de pression. Une comparaison des courbes de vitesse de plusieurs compétiteurs, tels que des skieurs ou surfeurs, peut être effectuée également après la course.

Avantageusement, des mesures de temps intermédiaires peuvent être effectuées par l'intermédiaire du module à transpondeur, qui comprend le capteur de vitesse radar Doppler, le capteur de mouvement et le capteur de pression, suite à la synchronisation du capteur de pression du module à transpondeur dès le départ de la course. Principalement, ces mesures de temps intermédiaires peuvent être déterminées par une mesure de l'altimètre calibré depuis le départ de la course.

A cet effet, l'invention concerne aussi un système de mesure d'au moins la vitesse d'un compétiteur durant une course, pour la mise en oeuvre du procédé de mesure, et qui comprend les caractéristiques définies dans la revendication indépendante 10.

Des formes d'exécution particulières du système de mesure sont définies dans les revendications dépendantes 11 et 12.

### Brève description des dessins

Les buts, avantages et caractéristiques du procédé et système de mesure d'au moins la vitesse d'un compétiteur durant une course, selon l'invention apparaîtront mieux dans la description suivante d'au moins une forme d'exécution non limitative illustrée par les dessins sur lesquels :
la figure 1 représente schématiquement selon l'invention un système de mesure d'au moins la vitesse en temps réel ou en continu d'un compétiteur durant une course pour la mise en œuvre du procédé de mesure selon l'invention, et
la figure 2 représente schématiquement les composants du module à transpondeur, qui est porté par le compétiteur pour la mesure d'au moins une vitesse durant la course selon l'invention.

### Description détaillée de l'invention

Dans la description suivante, tous les éléments du système de mesure d'au moins la vitesse d'un compétiteur, tel qu'un skieur ou snowboardeur durant une course de ski ou de snowboard pour la mise en œuvre du procédé de mesure, qui sont bien connus de l'homme du métier dans ce domaine technique, ne seront relatés que de manière simplifiée.

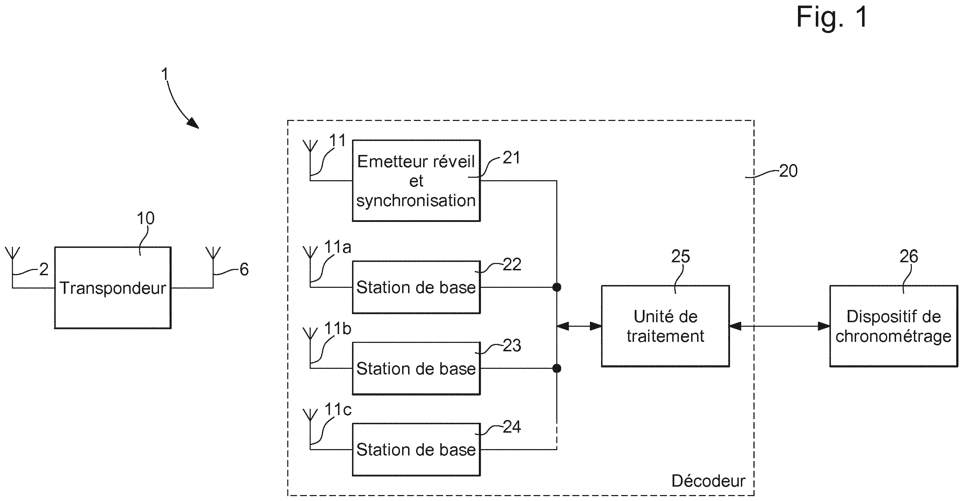

La figure 1 représente schématiquement les principaux éléments, qui composent un système de mesure 1 de la vitesse d'un compétiteur dans une course, telle qu'une course de ski ou de snowboard. Le système de mesure 1 est prévu pour effectuer une mesure en temps réel, c'est-à-dire en direct, ou en continu de la vitesse d'un compétiteur depuis le départ de la course et jusqu'à l'arrivée tout en permettant un affichage en direct de ladite vitesse sur un écran ou par une retransmission télévisuelle sur une télévision à des spectateurs. Les différentes étapes du procédé de mesure de vitesse seront décrites ci-après en détail après la description des différents composants du système de mesure 1.

Le système de mesure 1 comprend un ou plusieurs modules à transpondeur 10, qui sont destinés à être portés chacun par un compétiteur tout en étant personnalisé audit compétiteur, qui le porte pour la mesure notamment de ladite vitesse durant la course. Un code d'identification est attribué dans le module à transpondeur 10 à chaque compétiteur le portant. Chaque module à transpondeur 10 pour la compétition est disposé par exemple au niveau d'une des chaussures du compétiteur. Le système de mesure comprend encore un dispositif décodeur 20 lié à un dispositif de chronométrage 26, qui peut comprendre au moins un écran d'affichage, non représenté, de données de mesure dans la course.

Ce dispositif décodeur 20 comprend tout d'abord un émetteur 21 pour la transmission par une antenne 11 d'au moins un signal de réveil ou d'activation à destination d'au moins un module à transpondeur 10 porté par un compétiteur. L'émetteur 21 peut également transmettre un signal de réveil et de synchronisation au module à transpondeur 10 pour synchroniser une base de temps du module à transpondeur. La transmission du signal d'activation et de synchronisation peut être faite à longue distance par exemple depuis la zone d'arrivée de la course ou également dans la zone de départ à courte distance. Le module à transpondeur 10 reçoit le signal de réveil et de synchronisation par une première antenne 2 au départ de la course.

Il est à noter que l'activation du module à transpondeur 10 peut aussi être effectuée par l'intermédiaire de capteurs sur place, c'est-à-dire à l'endroit du départ de la course ou disposés directement sur le ski.

Le dispositif décodeur 20 comprend encore une ou plusieurs stations de base 22, 23, 24, qui peuvent recevoir chacun un signal de mesure, notamment un signal de mesure de vitesse du compétiteur, transmis par une seconde antenne 6 du module à transpondeur 10 en course. Chaque station de base 22, 23, 24 peut recevoir séparément ou ensemble par une antenne de réception 11a, 11b, 11c, le signal de mesure de vitesse en temps réel ou en continu du module à transpondeur 10. Le dispositif décodeur 20 comprend en outre une unité de traitement 25 reliée à l'émetteur 21 et aux différentes stations de base 22, 23, 24, afin de traiter les commandes ou les données de mesure pour les transmettre au dispositif de chronométrage 26.

Il est à noter que chaque station de base 22, 23, 24 du dispositif décodeur 20 peut être placée à un endroit spécifique de la piste de course. Il peut être prévu par exemple pour une course de ski ou de snowboard, de placer des stations de base 22, 23, 24 espacées l'une de l'autre de 200 à 400 m entre le départ et l'arrivée de la course. Les différentes stations de base 22, 23, 24 peuvent être reliées par câble ou également par une communication sans fil de manière à transmettre les données ou commandes à l'unité de traitement 25 par câble ou également par une transmission sans fil.

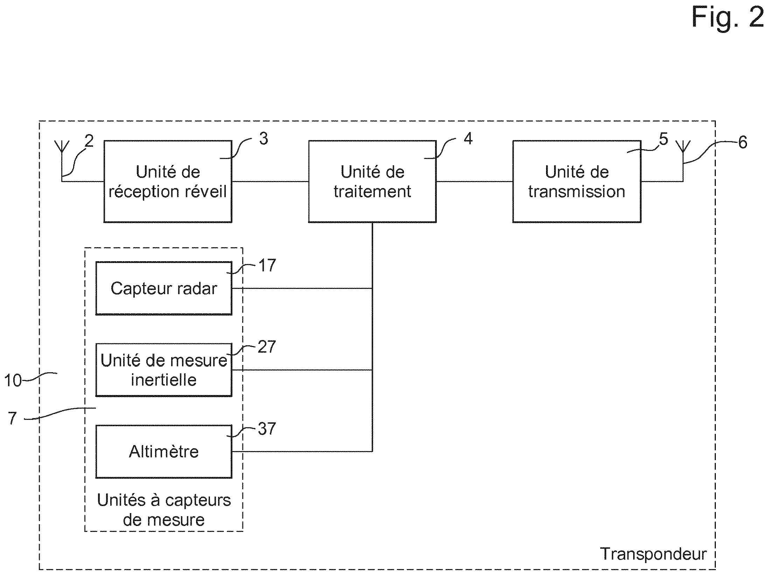

A la figure 2, il est représenté le module à transpondeur 10 avec les principaux composants, qu'il comprend. Le module à transpondeur 10 comprend une unité de réception sans fil de signaux 3 pour recevoir par une première antenne 2 au moins un signal d'un émetteur du dispositif décodeur. Le signal fourni par l'émetteur est généralement un signal de réveil ou d'activation du module à transpondeur, qui est de préférence du type actif. Ce signal de réveil est principalement reçu au moment du départ de la course. Le module à transpondeur 10 peut aussi recevoir un signal de réveil ou activation, et de synchronisation pour synchroniser une base de temps du transpondeur dès le départ de la course.

Le module à transpondeur 10 comprend encore une unité de mesure 7 à au moins un capteur de mesure notamment pour la mesure d'une vitesse du compétiteur durant la course. De préférence, l'unité de mesure 7 comprend au moins un capteur de vitesse radar à effet Doppler 17. L'unité de mesure 7 peut encore comprendre une unité de mesure inertielle 27, qui est un capteur de mouvement composé d'un accéléromètre triaxial, d'un gyroscope triaxial et d'un magnétomètre triaxial. L'unité 7 à capteurs de mesure peut encore comprendre un capteur de pression barométrique, tel qu'un altimètre 37, qui peut être calibré par le signal de réveil et de synchronisation reçu de l'émetteur du dispositif décodeur au moment du départ de la course du compétiteur. Généralement, la calibration de l'altimètre doit être effectuée à l'endroit du départ de la course juste avant le départ de ladite course ou à l'instant du départ de la course.

Le module à transpondeur 10 comprend encore une unité de traitement 4, qui reçoit le signal d'activation et de synchronisation de l'unité de réception 3, ainsi que les mesures effectuées par l'unité de mesure 7 à au moins un capteur une fois activée. Cette unité de traitement 4 peut comprendre un processeur ou microprocesseur et un oscillateur pour cadencer les opérations de traitement, ainsi que pour servir comme base de temps une fois calibré par le signal d'activation et de synchronisation. L'unité de traitement 4 est reliée à une unité de transmission 5 pour la transmission d'un signal de données de mesure d'au moins la vitesse du compétiteur par une seconde antenne 6. Une mémoire, non représentée, peut encore être prévue dans le module à transpondeur 10 pour mémoriser successivement différentes mesures de vitesse dans le temps et des données de calibration ou temporelles, ainsi que la mémorisation d'un code spécifique d'identification du compétiteur.

Il est à noter que les première et seconde antennes 2, 6 du module à transpondeur 10 peuvent être une unique antenne pour la réception d'un signal de contrôle, de réveil et de synchronisation et la transmission d'un signal de données de mesure. Pour la transmission d'un signal de données, la fréquence porteuse du signal peut être comprise entre 300 MHz et 3'000 MHz, et notamment par exemple à 433 MHz, 868 MHz ou 915 MHz. Une modulation des données est effectuée par modulation d'amplitude ou modulation de fréquence ou de phase. Il peut être choisi parmi plusieurs fréquences porteuses pour la transmission du signal de données au dispositif décodeur. Ainsi différents canaux de transmission peuvent être sélectionnés.

En référence aux figures 1 et 2, le procédé de mesure d'au moins la vitesse d'un compétiteur, qui est un skieur ou un snowboardeur, en temps réel, c'est-à-dire en direct, ou en continu durant une course de ski ou de snowboard est maintenant décrit. Le procédé comprend une première étape d'activer le module à transpondeur 10, qui comprend une unité de mesure 7 à au moins un capteur de mesure, dès le départ de la course. Ensuite le procédé comprend une seconde étape, qui consiste à mesurer en continu la vitesse du compétiteur au moyen de l'unité de mesure le long de la piste et durant ladite course. Dans une troisième étape du procédé, une transmission de la mesure de la vitesse est effectuée à au moins une station de base 22, 23, 24 du système de mesure 1 en temps réel ou en continu. Finalement, la mesure de la vitesse du compétiteur est affichée sur au moins un écran ou par une retransmission télévisuelle sur une télévision pour les spectateurs. La vitesse du compétiteur peut ainsi être mesurée en tout point de la piste de course et en direct, et visionnée sur un écran

Chaque station de base 22, 23, 24 ou au moins une station de base peut recevoir un signal de données de mesure de la vitesse en temps réel ou en continu du module à transpondeur 10 porté par le compétiteur durant sa course. Une transmission à une unité de traitement 25 d'un dispositif décodeur peut être effectuée. Il peut encore être prévu une transmission de l'unité de traitement 25 du dispositif décodeur au dispositif de chronométrage 26, qui gère le chronométrage de la course de chaque compétiteur. Depuis le dispositif de chronométrage 26, il y a un affichage de la vitesse en temps réel ou en continu sur au moins un écran pour les spectateurs.

Le module à transpondeur 10 peut comprendre une unité de mesure 7, qui comprend en plus du capteur radar à effet Doppler 17, un capteur de mouvement, qui est une unité de mesure inertielle 27. Un altimètre 37 peut encore être prévu pour constituer avec le capteur radar 17 et le capteur de mouvement 27, une unité à trois capteurs de mesure. Principalement, la mesure de vitesse par le capteur radar à effet Doppler est effectuée et transmise à l'unité de traitement 4 pour une transmission à au moins une station de base 22, 23, 24. Il peut être prévu que la mesure par le capteur radar 17 soit momentanément interrompue pendant une courte période, par exemple pendant une durée de l'ordre de 2 ms lors de la transmission du signal de données de mesure par l'unité de transmission 5 du module à transpondeur 10. Ceci permet d'éviter des perturbations lors de la mesure de vitesse et de la transmission du signal de données.

Lors de l'activation du module à transpondeur 10 au moment du départ de la course, il peut y avoir également une synchronisation du module à transpondeur, de manière à lui permettre également par une base de temps intégrée de déterminer un temps de course. L'activation du module à transpondeur est exécutée soit en utilisant une communication à champ magnétique à courte distance ou à une fréquence radio à longue distance en utilisant un matériel dédicacé situé proche de la zone de départ.

Lors du fonctionnement du module à transpondeur 10 depuis le départ de la course, il est détecté dans le module à transpondeur le moment où le capteur radar 17 perd de vue le sol par exemple durant un saut sur une bosse de la piste. Ainsi avec l'absence détectée des composantes de fréquence décalées dû à l'effet Doppler, il est estimé la vitesse courante sur la base des données de mesure par exemple d'accélération du capteur de mouvement 27. Une fusion de la mesure du capteur radar Doppler et du capteur de mouvement peut être opérée dans le module à transpondeur pour déterminer précisément une mesure de vitesse à communiquer en temps réel ou en continu. Pour augmenter encore la précision de cette estimation de vitesse, une vitesse verticale est prise en compte par la mesure du capteur de pression, qui est l'altimètre 37, qui est calibré dès le départ de la course.

Il est à noter que des sauts peuvent aussi être détectés par des caractéristiques spécifiques liées à l'accéléromètre du capteur de mouvement 27. Ces caractéristiques spécifiques sont par exemple l'absence de vibrations ou l'absence de la composante de gravité. La longueur du saut en mètres peut aussi être calculée et transmise à au moins une station de base 22, 23, 24. Pour ce faire, il est utilisé une orientation estimée depuis le capteur de mouvement 27 et/ou une estimation de vitesse depuis les capteurs radar 17 et/ou de mouvement 27, et/ou une vitesse verticale depuis le capteur de pression barométrique 37 durant le saut. Il est tenu compte aussi du temps de décollage et du temps d'atterrissage ou de contact avec la piste.

Avec un profil d'altitude précis du tracé de course, les mesures de vitesse en continu peuvent être adaptées ou appariées sur la base de la mesure du capteur de pression barométrique 37, qui est utilisé comme altimètre, à un endroit exact du tracé de course. En utilisant des indices temporels synchronisés de la mesure dans le module à transpondeur 10 et après calibration du capteur de pression 37, cela permet même une adaptation de position plus précise. Cette adaptation de position est plus précise aux points, où des temps intermédiaires sont pris généralement par des photocellules. Un tel appariement de position permet aussi de comparer des courbes de vitesse de différents skieurs après la course. De plus, en utilisant la mesure du capteur de pression barométrique avec la base de temps synchronisée, il peut être déduit la détermination de temps intermédiaires durant la course du compétiteur à n'importe quelle ligne virtuelle, qui est perpendiculaire à la pente de la montagne.

A partir de la description qui vient d'être faite, plusieurs variantes du procédé et système de mesure d'au moins la vitesse d'un compétiteur dans une course peuvent être conçues par l'homme du métier sans sortir du cadre de l'invention définie par les revendications. Le module à transpondeur peut comprendre plusieurs autres capteurs, tels qu'un capteur de température. Il est encore à noter que le système de mesure aurait pu aussi être utilisé pour mesurer la vitesse d'un compétiteur par exemple lors d'une autre course, comme une course de vélo ou un autre sport, voire pour la mesure de vitesse lors d'un saut à ski.

## Revendications

1. Procédé de mesure d'au moins une vitesse d'un compétiteur, tel qu'un skieur ou un surfeur des neiges, sur une piste de course, telle qu'une piste de ski ou de snowboard, au moyen d'un système de mesure (1) avec un module à transpondeur (10) porté par le compétiteur, le procédé comprenant les étapes de :
- activer et synchroniser le module à transpondeur (10), qui comprend une unité de mesure (7) à au moins un capteur de mesure (17, 27, 37), dès le départ de la course, par une transmission de synchronisation provenant d'un émetteur (21) d'un dispositif décodeur (20) du système de mesure (1),
- mesurer la vitesse du compétiteur au moyen de l'unité de mesure (7) par un capteur radar à effet Doppler (17) durant la course le long de la piste, et estimer une vitesse par un capteur de pression (37) de l'unité de mesure (7) du module à transpondeur (10) en coopération de la mesure effectuée par le capteur radar (17) lors d'une perte de vision du sol par le capteur radar (17), le capteur de pression, qui est un altimètre (37), étant calibré juste avant le départ de la course ou à l'instant du départ de la course,
- déterminer par l'altimètre avec une synchronisation d'une base de temps du module à transpondeur (10), des temps intermédiaires durant la course du compétiteur, et
- transmettre par une unité de transmission (5) du module à transpondeur (10), la mesure de la vitesse du compétiteur obtenue par le capteur radar à effet Doppler (17) et l'altimètre, et des temps intermédiaires à au moins une station de base (22, 23, 24) du système de mesure (1) en temps réel de manière à pouvoir afficher la vitesse du compétiteur en temps réel ou en continu sur au moins un écran.

2. Procédé de mesure selon la revendication 1, **caractérisé en ce que** le module à transpondeur (10) est activé et synchronisé dès le départ de la course par un signal de réveil et de synchronisation de l'émetteur (21) du dispositif décodeur (20) du système de mesure (1).

3. Procédé de mesure selon la revendication 1, **caractérisé en ce que** des interruptions momentanées de la mesure de vitesse du capteur radar (17) sont effectuées durant la transmission du signal de données de mesure par l'unité de transmission (5).

4. Procédé de mesure selon la revendication 1, caractérisé ce qu'il est estimé une vitesse courante du compétiteur durant la course sur la base de données de mesure d'un capteur de mouvement (27) de l'unité de mesure (7) du module à transpondeur (10), suite à une absence détectée de composantes de fréquence décalées dû à l'effet Doppler du capteur radar (17).

5. Procédé de mesure selon la revendication 4, pour lequel le capteur de mouvement (27) est une unité de mesure inertielle, qui comprend un accéléromètre triaxial, un gyroscope triaxial et un capteur magnétique triaxial, **caractérisé en ce que** la vitesse courante est estimée par le capteur de mouvement (27).

6. Procédé de mesure selon la revendication 5, caractérisé ce qu'il est déterminé également par une mesure de l'unité de mesure inertielle, un temps de décollage et un temps d'atterrissage ou de contact avec la piste lors de sauts effectués durant la course.

7. Procédé de mesure selon la revendication 1, caractérisé ce qu'il est apparié des mesures de vitesse en des positions exactes sur la piste de course sur la base de mesures de la pression barométrique de l'altimètre (37) calibré.

8. Procédé de mesure selon la revendication 1, pour lequel le module à transpondeur (10) comprend dans une unité de traitement (4) un processeur et un oscillateur pour cadencer des opérations du module à transpondeur (10) et servir comme base de temps, qui est synchronisée dès le départ de la course, caractérisé ce que des indices temporels synchronisés de la mesure dans le module à transpondeur (10) sont utilisés avec la mesure de l'altimètre (37) calibré pour déterminer précisément des positions sur la piste de course.

9. Procédé de mesure selon la revendication 8, **caractérisé en ce qu'**après la transmission du signal de données de mesure vers au moins une station de base (22, 23, 24) d'un dispositif décodeur (20) du système de mesure (1), il est effectué une comparaison de courbes de vitesse de plusieurs compétiteurs au terme de la course en liaison à un dispositif de chronométrage (26) lié au dispositif décodeur (20).

10. Système de mesure (1) d'au moins une vitesse d'un compétiteur durant une course pour la mise en oeuvre du procédé de mesure selon l'une des revendications précédentes, le système de mesure comprenant au moins un module à transpondeur (10) personnalisé et porté par le compétiteur, qui comprend une unité de mesure (7) pour la mesure d'une vitesse, un dispositif décodeur (20), et un dispositif de chronométrage (26) lié au dispositif décodeur (20) pour le chronométrage de la course de chaque compétiteur, le dispositif décodeur (20) comprenant un émetteur (21) pour la transmission d'un signal d'activation pour le module à transpondeur (10) au départ d'une course, et au moins une station de base (22, 23, 24) pour recevoir un signal de données de mesure de vitesse en continu provenant du module à transpondeur (10) durant la course,
**caractérisé en ce que** le module à transpondeur (10) est configuré pour être activé et synchronisé dès le départ de la course par l'émetteur (21) du dispositif décodeur (20) pour pouvoir fournir une mesure de vitesse obtenue par un capteur radar à effet Doppler (17) du module à transpondeur (10) en continu en tout point d'une piste de course, et
**en ce que** le module à transpondeur (10) comprend un altimètre (37) calibré et configuré pour estimer une vitesse en coopération de la mesure effectuée par le capteur radar (17) lors d'une perte de vision du sol par le capteur radar (17) et pour déterminer des temps intermédiaires durant la course avec le module à transpondeur (10) muni d'une base de temps synchronisée pour une transmission par une unité de transmission (5) du module à transpondeur (10) de la mesure de la vitesse du compétiteur obtenue par le capteur radar à effet Doppler (17) et l'altimètre, et des temps intermédiaires à au moins une station de base (22, 23, 24) du système de mesure (1).

11. Système de mesure (1) selon la revendication 10, **caractérisé en ce que** l'unité de mesure (7) du module à transpondeur (10) comprend en outre un capteur de mouvement, qui est une unité de mesure inertielle (27) pour estimer une vitesse du compétiteur si le capteur radar ne fournit pas une vitesse adaptée lors d'un saut durant la course.

12. Système de mesure (1) selon la revendication 10, **caractérisé en ce que** le module à transpondeur (10) comprend une unité de réception (3) pour recevoir un signal d'activation et de synchronisation de l'émetteur (21) du dispositif décodeur (20), une unité de traitement (4) reliée à l'unité de réception (3) et à l'unité de mesure (7), et une unité de transmission (5) d'un signal de données de mesure de vitesse provenant de l'unité de traitement (4).

## Patentansprüche

1. Verfahren zum Messen mindestens einer Geschwindigkeit eines Rennteilnehmers wie etwa eines Skifahrers oder eines Snowboarders auf einer Rennstrecke wie etwa einer Skipiste oder einer Snowboard-Piste mittels eines Messsystems (1) mit einem vom Rennteilnehmer getragenen Transpondermodul (10), wobei das Verfahren die folgenden Schritte umfasst:
- Aktivieren und Synchronisieren des Transpondermoduls (10), das eine Messeinheit (7) mit mindestens einem Messsensor (17, 27, 37) umfasst, ab dem Start des Rennens durch eine Synchronisierungsübertragung ausgehend von einem Sender (21) einer Decodierungsvorrichtung (20) des Messsystems (1),
- Messen der Geschwindigkeit des Rennteilnehmers mittels der Messeinheit (7) durch einen Radarsensor (17) mit Doppler-Effekt während des Rennens entlang der Piste und Schätzen einer Geschwindigkeit durch einen Drucksensor (37) der Messeinheit (7) des Transpondermoduls (10) in Zusammenwirkung mit der durch den Radarsensor (17) ausgeführten Messung, wenn der Radarsensor (17) seine Sicht auf den Boden verliert, wobei der Drucksensor, der ein Höhenmesser (37) ist, direkt vor dem Start des Rennens oder zum Zeitpunkt des Starts des Rennens kalibriert wird,
- Bestimmen von Zwischenzeiten während des Rennens des Rennteilnehmers durch den Höhenmesser mit einer Zeitbasis-Synchronisation des Transpondermoduls (10), und
- Übertragen der Messung der Geschwindigkeit des Rennteilnehmers, die durch den Radarsensor (17) mit Doppler-Effekt und den Höhenmesser erhalten wird, und der Zwischenzeiten durch eine Sendeeinheit (5) des Transpondermoduls (10) an mindestens eine Basisstation (22, 23, 24) des Messsystems (1) in Echtzeit, derart, dass die Geschwindigkeit des Rennteilnehmers in Echtzeit oder kontinuierlich auf mindestens einem Bildschirm angezeigt werden kann.

2. Messverfahren nach Anspruch 1, **dadurch gekennzeichnet, dass** das Transpondermodul (10) ab dem Start des Rennens durch ein Aufweck- und Synchronisierungssignal des Senders (21) der Decodierungsvorrichtung (20) des Messsystems (1) aktiviert und synchronisiert wird.

3. Messverfahren nach Anspruch 1, **dadurch gekennzeichnet, dass** während der Übertragung des Messdatensignals durch die Übertragungseinheit (5) kurzzeitige Unterbrechungen der Geschwindigkeitsmessung des Radarsensors (17) auftreten.

4. Messverfahren nach Anspruch 1, **dadurch gekennzeichnet, dass** infolge eines detektierten Fehlens von aufgrund des Doppler-Effekts des Radarsensors (17) versetzten Frequenzkomponenten eine momentane Geschwindigkeit des Rennteilnehmers während des Rennens auf der Basis von Messdaten eines Bewegungssensors (27) der Messeinheit (7) des Transpondermoduls (10) geschätzt wird.

5. Messverfahren nach Anspruch 4, wobei der Bewegungssensor (27) eine Trägheitsmesseinheit ist, die einen dreiachsigen Beschleunigungsmesser, ein dreiachsiges Gyroskop und einen dreiachsigen magnetischen Sensor umfasst, **dadurch gekennzeichnet, dass** die aktuelle Geschwindigkeit durch den Bewegungssensor (27) geschätzt wird.

6. Messverfahren nach Anspruch 5, **dadurch gekennzeichnet, dass** weiterhin durch eine Messung der Trägheitsmesseinheit während in einem Rennen ausgeführter Sprünge eine Abhebezeit und eine Aufsetzzeit oder eine Kontaktzeit mit der Piste bestimmt werden.

7. Messverfahren nach Anspruch 1, **dadurch gekennzeichnet, dass** auf der Grundlage von Messungen des barometrischen Drucks des kalibrierten Höhenmessers (37) Geschwindigkeitsmessungen den exakten Positionen auf der Rennstrecke zugeordnet werden.

8. Messverfahren nach Anspruch 1, wobei das Transpondermodul (10) in einer Verarbeitungseinheit (4) einen Prozessor und einen Oszillator zum Takten von Abläufen des Transpondermoduls (10) und zum Bereitstellen einer Zeitbasis, die mit dem Start des Rennens synchronisiert ist, umfasst, **dadurch gekennzeichnet, dass** synchronisierte Zeitindizes der Messung im Transpondermodul (10) zusammen mit der Messung des kalibrierten Höhenmessers (37) für die präzise Bestimmung von Positionen auf der Rennstrecke verwendet werden.

9. Messverfahren nach Anspruch 8, **dadurch gekennzeichnet, dass** nach der Übertragung des Messdatensignals an mindestens eine Basisstation (22, 23, 24) einer Decodierungsvorrichtung (20) des Messsystems (1) am Ende des Rennens ein Vergleich von Geschwindigkeitskurven mehrerer Rennteilnehmer des Rennens in Verbindung mit einer mit der Decodierungsvorrichtung (20) verbundenen Zeitmessvorrichtung (26) durchgeführt wird.

10. System (1) zum Messen mindestens einer Geschwindigkeit eines Rennteilnehmers während eines Rennens zur Durchführung des Messverfahrens nach einem der vorhergehenden Ansprüche, wobei das Messsystem mindestens ein Transpondermodul (10) umfasst, das personalisiert ist und vom Rennteilnehmer getragen wird und eine Messeinheit (7) zum Messen einer Geschwindigkeit, eine Decodierungsvorrichtung (20) und eine Zeitmessvorrichtung (26) umfasst, die mit der Decodierungsvorrichtung (20) verbunden ist, um die Zeit des Rennens jedes Rennteilnehmers zu messen, wobei die Decodierungsvorrichtung (20) einen Sender (21) zum Übertragen eines Aktivierungssignals für das Transpondermodul (10) am Start eines Rennens und mindestens eine Basisstation (22, 23, 24) zum Empfangen eines während des Rennens vom Transpondermodul (10) stammenden Geschwindigkeitsmessdaten-Dauersignals umfasst,
**dadurch gekennzeichnet, dass** das Transpondermodul (10) konfiguriert ist, ab dem Start des Rennens durch den Sender (21) der Decodierungsvorrichtung (20) aktiviert und synchronisiert zu werden, um eine Geschwindigkeitsmessung zu liefern, die von einem Radarsensor (17) mit Doppler-Effekt des Transpondermoduls kontinuierlich an jedem Punkt einer Rennstrecke erhalten wird, und
dass das Transpondermodul (10) einen Höhenmesser (37) umfasst, der kalibriert und konfiguriert ist, eine Geschwindigkeit in Zusammenwirkung mit der vom Radarsensor (17) ausgeführten Messung zu schätzen, wenn der Radarsensor (17) seine Sicht auf den Boden verliert, und um Zwischenzeiten während des Rennens mit dem Transpondermodul (10), der eine synchronisierte Zeitbasis besitzt, zu bestimmen, um über eine Übertragungseinheit (5) des Transpondermoduls (10) die Messung der Geschwindigkeit des Rennteilnehmers, die von dem Radarsensor (17) mit Doppler-Effekt und von dem Höhenmesser erhalten werden, und Zwischenzeiten an mindestens eine Basisstation (22, 23, 24) des Messsystems (1) zu übertragen.

11. Messsystem (1) nach Anspruch 10, **dadurch gekennzeichnet, dass** die Messeinheit (7) des Transpondermoduls (10) ferner einen Bewegungssensor umfasst, der eine Trägheitsmesseinheit (27) ist, um eine Geschwindigkeit des Rennteilnehmers zu schätzen, wenn der Radarsensor bei einem Sprung während des Rennens keine passende Geschwindigkeit liefert.

12. Messsystem (1) nach Anspruch 10, **dadurch gekennzeichnet, dass** das Transpondermodul (10) eine Empfangseinheit (3) für den Empfang eines Aktivierungs- und Synchronisierungssignals vom Sender (21) der Decodierungsvorrichtung (20), eine Verarbeitungseinheit (4), die mit der Empfangseinheit (3) und mit der Messeinheit (7) verbunden ist, und eine Einheit (5) zum Übertragen eines von der Verarbeitungseinheit (4) stammenden Geschwindigkeitsmessdatensignals umfasst.

## Claims

1. Method for measurement of at least one speed of a competitor, such as a skier or a snowboarder, on a race course, such as a ski or snowboard course, by means of a measurement system (1) with a transponder module (10) worn by the competitor, the method including the steps of:
- activating and synchronising the transponder module (10), which includes a measurement unit (7) with at least one measurement sensor (17, 27, 37), at the start of the race, by a synchronising transmission from a transmitter (21) of a decoder device (20) of the measurement system (1),
- measuring the speed of the competitor by means of the measurement unit (7) by a Doppler radar sensor (17) during the race along the course, and estimating a speed by a pressure sensor (37) of the measurement unit (7) of the transponder module (10) in cooperation with the measurement made by the radar sensor (17) during loss of sight of the ground by the radar sensor (17), the pressure sensor, which is an altimeter (37), being calibrated just before the start of the race or at the moment that the race starts,
- determining by the altimeter with a synchronisation of a time base of the transponder module (10), intermediate times during the competitor's race, and
- transmitting by a transmission unit (5) of the transponder module (10), the competitor's speed measurement obtained by the Doppler radar sensor (17) and the altimeter, and intermediate times to at least one base station (22, 23, 24) of the measurement system (1) in real time in order to display the competitor's speed in real time or continuously on at least one screen.

2. Measurement method according to claim 1, **characterized in that** the transponder module (10) is activated and synchronised as soon as the race starts by a wake-up and synchronisation signal from the transmitter (21) of the decoder device (20) of the measurement system (1).

3. Measurement method according to claim 1, **characterized in that** momentary interruptions in the speed measurement by the radar sensor (17) are effected during the transmission of the measurement data signal by the transmission unit (5).

4. Measurement method according to claim 1, **characterized in that** a current speed of the competitor is estimated during the race based on measurement data from a motion sensor (27) of the measurement unit (7) of the transponder module (10), following detection of an absence of Dopplershifted frequency components from the radar sensor (17).

5. Measurement method according to claim 4, wherein the motion sensor (27) is an inertial measurement unit, which includes a 3-axis accelerometer, a 3-axis gyroscope and a 3-axis magnetic sensor, **characterized in that** the current speed is estimated by the motion sensor (27).

6. Measurement method according to claim 5, **characterized in that** a measurement of the inertial measurement unit also determines a take-off time and a landing time or contact time with the slope when jumps are made during the race.

7. Measurement method according to claim 1, **characterized in that** speed measurements are matched to exact positions on the race course based on barometric pressure measurements from the calibrated altimeter (37).

8. Measurement method according to claim 1, wherein the transponder module (10) includes inside a processing unit (4) a processor and an oscillator for clocking operations of the transponder module (10) and acting as a time base, which is synchronised at the start of the race, **characterized in that** that synchronised time indices of the measurement in the transponder module (10) are used with the measurement from the calibrated altimeter (37) for precisely determining positions on the race course.

9. Measurement method according to claim 8, **characterized in that**, after transmission of the measurement data signal to at least one base station (22, 23, 24) of a decoder device (20) of the measurement system (1), a comparison is made of the speed curves of several competitors at the end of the race in cooperation with a timing device (26) connected to the decoder device (20).

10. System (1) for measuring at least one speed of a competitor during a race for implementation of the measurement method according to any of the preceding claims, the measurement system including at least one personalised transponder module (10) worn by the competitor, which includes a measurement unit (7) for measuring a speed, a decoder device (20), and a timing device (26) connected to the decoder device (20) for timing the race of each competitor, the decoder device (20) including a transmitter (21) for transmission of an activation signal for the transponder module (10) at the start of a race, and at least one base station (22, 23, 24) for receiving a continuous speed measurement data signal from the transponder module (10) during the race,
**characterized in that** the transponder module (10) is configured to be activated and synchronised as soon as the race starts by the transmitter (21) of the decoder device (20) in order to provide a speed measurement obtained by the Doppler radar sensor (17) continuously at any point on a race course, and
**in that** the transponder module (10) includes an altimeter (37) calibrated and configured to estimate a speed in cooperation with the measurement made by the radar sensor (17) during loss of sight of the ground by the radar sensor (17), and to determine intermediate times during the race with the transponder module (10) having a synchronised time base for a transmission by a transmission unit (5) of the transponder module (10) of the competitor's speed measurement obtained by the Doppler radar sensor (17) and the altimeter, and intermediate times to at least one base station (22, 23, 24) of the measurement system.

11. Measurement system (1) according to claim 10, **characterized in that** the measurement unit (7) of the transponder module (10) further includes a motion sensor, which is an inertial measurement unit (27) for estimating a speed of the competitor if the radar sensor does not provide an adjusted speed when there is a jump during the race.

12. Measurement system (1) according to claim 10, **characterized in that** the transponder module (10) includes a receiver unit (3) for receiving a wake-up and synchronisation signal (21) from the transmitter (21) of the decoder device (20), a processing unit (4) connected to the receiver unit (3) and to the measurement unit (7), and a unit (5) for transmission of a speed measurement data signal from the processing unit (4).
